# EUROPEAN PATENT APPLICATION

(11) **EP 3 244 183 A1**
(43) Date of publication of application: **15.11.2017**
(21) Application number: 15832948.2
(22) Date of filing: 09.11.2015
(51) Int. Cl.: G01M 3/28

(54) **FLUID LEAK AND MICROLEAK DETECTOR AND METHOD OF DETECTING LEAKS AND MICROLEAKS**

(30) Priority: 18.11.2014 ES 201431691
(71) Applicant: Sitexco Girona, S.L., 17180 Vilablareix (Gerona) (ES)
(72) Inventor: GUIXERAS NOGUÉ, Lluis, E-17180 Vilablareix (Gerona) (ES); GUIXERAS LLORÀ, Rafael, E-17180 Vilablareix (Gerona) (ES)
(74) Representative: Torras Toll, Jorge
(86) International application number: PCT/ES2015/070799
(87) International publication number: WO 2016/079353

(57) **Abstract**

Fluid leak and microleak detector that incorporates three aligned elements: the first element being a solenoid valve (4) that is aligned to the direction of flow, which is followed by a flowmeter (5) and finally a pressure switch (6). These items are managed and connected to an electronic board (7) which contains a computer application with two complementary routines; a routine that detects microleaks (13) for fluid losses greater than 0.15 l/h which is linked to the pressure switch (6) and the solenoid valve (4), and another routine that detects leaks (12) for fluid losses of around 3l/h and greater, which is linked to the flowmeter (5) and the solenoid valve.

## Description

### TECHNICAL FIELD

The present invention relates to a device for detecting fluid leaks; one of its main applications is to detect domestic leaks but it can be applied to any type of fluid distribution network.

This invention is capable of detecting fluid leaks and microleaks using a single device located at the inlet of the distribution network, detecting the leaks based on real time recorded values of flow and pressure.

### INVENTION BACKGROUND

Different devices are known for detecting liquid leaks, particularly devices that warn of leaks in homes, shops, offices and even industrial facilities. They respond to a leak in two ways: by emitting an optical / acoustic alarm, or by shutting off the general water supply.

These devices act according to three known techniques:
- Moisture detection - examples of this technology are the devices described in Utility Model U9501958, and patents 9502360 and 9001920. These have moisture sensors which on contact with water from a leak trigger an optical / acoustic alarm and in some cases cut off the water supply to the network. Their main problem is that they can only detect leaks in the specific areas of the network where the sensor is installed. If the leak occurs in a section that is not covered by the sensor system then it will not be detected. This requires multiple sensors to be installed throughout the distribution network, therefore resulting in a very expensive installation.
- Detection by vibration - an example of this is the utility model U 161274. This is a less common technique that basically involves permanently monitoring a water distribution network to detect the characteristic sound of a water leak, whose position is located as a function of the soundwave intensity. This is an appropriate system for hidden conduits where the pipe burst is not in a visible area, but it is inappropriate for typical distribution networks used in homes, offices, shops and industrial facilities. There are high levels of vibration in these types of networks and it is possibly easier to implement a system based on moisture detection due to the numerous sections of exterior pipework.
- Measurement of water flow at a point in the network. An example of this technology is described in patent ES 2 332 644 where two flow variables, their value (l/h) and their duration are studied to detect possible leaks. In this technology a flowmeter continually measures the flow of water through a control unit, where the reception time is also determined. This control unit incorporates a computer program that determines if there is a leak based on two axioms: Firstly, in a home, the flowmeter cannot record flow for more than a certain amount of time. If it does then the system assumes that there is a leak. Secondly, a value of maximum consumption for a home can be determined depending on the characteristics of the network (number of taps, number of bathrooms, washing machine, dishwasher ...) so a value greater than the maximum reference flowrate is assumed to be a water leak. In any case, the determination of a leak in the system is followed by an alarm among other possible measures including shutting off the supply by instructing a solenoid valve to close from the control unit.

This last leak detection technology can be considered as the most advanced, economical and easy to apply system for houses. However, it has two technical problems.

Firstly, it cannot detect leaks below 3 l/h because the flowmeters currently available are not able to detect lower flows.

Secondly, it is slow at determining a water leak. As the detection criterion is the measurement of flow for longer than the reference time, the instruction to shut-off the main water supply is given when large volumes of water have already been released into the home.

Therefore, the proposed technical problem that the new invention solves is twofold: firstly, it detects water microleaks of less than 3 l/h and secondly, it is capable of determining leaks below the maximum flowrate value without waiting for a maximum permissible period of continuous water flow to pass.

### DESCRIPTION OF THE INVENTION.

The new leak and microleak detector whose patent is sought detects leaks of any type of fluid by measuring flow and pressure in the network.

Basically the new system monitors the fluid flowrate in the network and is provided with an intelligent system that detects abnormal flowrates outside of the ranges of some predefined parameters. These flowrates are those considered as constituting a leak in the network.

Aside from detecting leaks, the new system is capable of detecting microleaks, which are fluid leaks of around 0.15 l/h, typically at joints, taps, valves, pores, or other events involving the loss of very small flows.

The novel detector is inserted into the inlet of the network. For example, in the case of a house, in the mains water inlet, preferably after the utility company's water meter.

Operationally the new detector consists of three elements that are all aligned. The first element is a solenoid valve that is aligned to the direction of flow, which is followed by a flowmeter and finally a pressure switch. These elements are managed and connected to an electronic board, a Programmable Logic Controller (PLC) or similar element, with which the user can interact via a keyboard, keypad, touch screen or any other suitable means to input data and select options.

All these elements can be incorporated into a body or housing that unites them into a single device.

One of the new features of this invention is that the electronic board houses a computer application with two complementary routines that act alternatively. One routine governs the pressure switch and the solenoid valve, and optionally also governs the flowmeter in more developed versions. The second routine governs the flowmeter and the solenoid valve.

The first routine aims to detect microleaks corresponding to fluid losses greater than 0.1 l/h, while the second routine detects leaks greater than 3 l/h.

The alternative operation of both routines ensures that any leak in the network above 0.15 l/h is detected, setting off a warning or alarm in the case of microleaks, and also shutting off the water supply for leaks greater than 3 l/h.

The location of microleaks is done with the first program routine as a one-off test at the user's request, or as part of a scheduled activity that runs at regular intervals.

Its operation follows the assumption that if there are no microleaks and the network is kept pressurised, then the fluid pressure should be kept constant. However, if there is a microleak then the fluid volume will decrease and therefore the pressure will also decrease.

This pressure differential can also be driven by changes in temperature or due to dilation of the network pipes or the fluid itself, so an algorithm is required to discern when there is a microleak and when not.

It is based on a network condition with no fluid consumption, so in the example of a home, all the taps are closed and any devices capable of consuming water are turned off.

In such conditions, the resident program on the electronic board sends a signal to the solenoid valve to put it in a closed position, thereby pressurising the network. In the most basic versions the user must ensure that all the taps are closed. However in more developed versions the application will check that the recorded flowrate is 0 before closing the solenoid valve, so it is assumed that there is no consumption in the network. If this is not the case then the test is suspended.

After pressurising the network, the pressure switch begins recording pressure measurements in the network (Pn) which are analysed in the electronic board. This analysis consists of comparing the recorded value (Pn) with the previous value (Pn-1), verifying if:
- (Pn) = (Pn-1)
   or
- (Pn) ≠ (Pn-1)

The number of matching results of each type is in turn recorded and analysed by an algorithm programmed into the application, where the existence of a microleak is determined as a function of the time (Tt) and the number of matching results in set periods of time (Tp).

During most of the day, the control of possible leaks is done using the second routine that only detects leaks above 3 l/h.

In this operating mode the electronic board analyses the recorded values from the flowmeter and compares them with reference values that have been introduced or selected with the device's keyboard or keypad, and it controls the time that passes since the start of the assessment.

Leak detection adheres to three principles:
- 1: The registered flowrate value at any time has a maximum allowable value (Qmax) depending on the characteristics of the network that is being monitored. A flowrate greater than (Qmax) is considered to be a leak.
- 2: The maximum time that a given flowrate can be registered (TQmax) is inversely proportional to its volume. In this way, a flowrate close to Qmax can only be registered for a short period of time, while a smaller flowrate may be recorded for longer. Each volume of flow (Qn) is associated with a maximum recording time (Tn). If the flow Qn is recorded for more than its associated time (Tn), it is considered to be a leak.
- 3: At some point the flowrate recorded must be zero because it is not possible for a network to have indefinite consumption, however small this may be. Therefore, a maximum registration period of uninterrupted flow (Tmax) is established. A flowrate that is recorded for longer than this time (Tmax), regardless of its value, is considered to be a leak.

Operationally, this routine has two phases. The reference values (Qmax), (Tmax) are set in the first phase by introducing them directly using the keypad, or by entering additional data such as the number of taps in the house, appliances susceptible to water consumption, watering points, etc. The values of (Qmax and Tmax), as well as the value of (TQmax), are deduced from this data based on the ratio Qn/Tn.

Following this, the actual leak detection is carried out in the second phase. In this phase, the application records the total time that passes since the start of the evaluation (Tt), as well as the flowrate values (Qn), and it carries out an analysis of the information received. (Tt) becomes 0 when the registered flow (Qn) is zero.

The variables used in this analysis are:
- Qn: nth flowrate value
- Qn-1: Value before Qn
- Tt: Current time value
- Tn: Maximum time associated with the value Qn
- Tn-1: Maximum time associated with Qn-1
- Tmax: maximum recordable time
- Qmax: maximum recordable flowrate

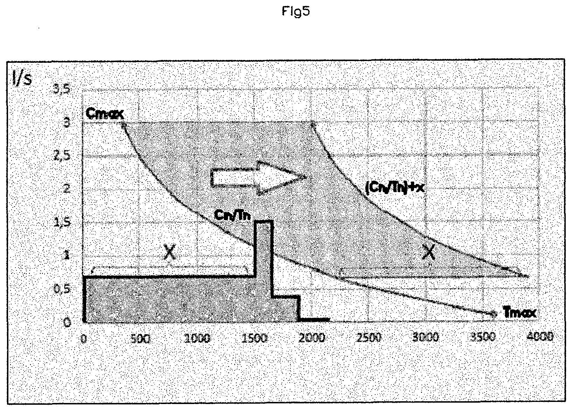

According to the described variables, the algorithm programmed in the application's second routine returns the following possible results:
1. If Qn >= Qmax: this case triggers a leak alarm.
2. If Tt >= Tmax: this also triggers a leak alarm.
3. If Qmax>Qn>Qn-1: (see fig.5)
   - 3.1 For the cases with Q>Qn-1, the relationship Qn/Tn becomes Qn/(Tn+x) where x is the total time recorded for Qn-1.
   - 3.2 For cases with Q=<Qn-1, the relationship Qn/Tn is maintained.
   - 3.3 If Tt=Tn the leak alarm is triggered.
   - 3.4 If Tt< Tn, there are no leaks.
4. If Qmax > Qn = Qn-1:
   - 4.1 If Tt>=Tn-1 this triggers a leak alarm.
   - 4.2 If Tt < Tn, there are no leaks.
5. If Qmax> Qn-1> Qn:
   - 5.1 If Tt>=Tn this triggers a leak alarm.
   - 5.2 If Tt < Tn, there are no leaks.
6. If Qn = 0: In this case, it is confirmed that there are no leaks, the process ends and recording time resets Tt = 0 waiting for the next network consumption.

The leak alarm subroutine involves two basic actions. The first is to send a signal to the solenoid valve to move it to its closed position and shut-off the mains water supply and therefore stop the leak. The second is to send a signal alerting the user which may be a warning light and/or sound for example. Apart from the two basic actions, the alarm subroutine may include other complementary commands, such as sending out a call for assistance to a failure centre, an SMS, email, etc.

The new detector has several advantages: it is able to diagnose a leak in less time than other systems because its algorithm is able to establish whether there is a leak before reaching Tmax and issue an alarm.

It is a scalable and reprogrammable system so that the device can be used in all types of houses by simply inputting the required baseline data about the number of taps, bathrooms, washing machines, etc.

It is able to carry out a test of the water distribution network to detect microleaks on demand or as part of a scheduled task. Therefore, the house's residents will be told when there is a breakage in the network where water is being lost in large volumes. This could be a defect or misalignment that loses fluid in very small amounts and is completely undetectable by the current detection devices.

### DESCRIPTION OF THE DRAWINGS

A sheet of drawings is attached with the aim of illustrating what has been explained in this report, in which:
Figure 1 shows a schematic example of the new leak detection device installed in a domestic water distribution network.
Figure 2 is a diagram showing the connectivity and relationships between the various system components.
Figure 3 is a diagram of the leak detection routine.
Figure 4 is a diagram of the microleak detection routine.
Figure 5 corresponds to a graph of flow/time, where the leak detection limits are set according to the reference values.

### REFERENCE LIST:

1. Body
2. House pipework
3. Water meter
4. Solenoid valve
5. Flowmeter
6. Pressure switch
7. Electronic board
8. Keypad
9. Alphanumeric display
10. Control panel
11. Pilot lights
12. Leak routine
13. Microleak routine
14. Sound generator

### DESCRIPTION OF EXAMPLE:

This example corresponds to a leak detector device based on this invention prepared to be used as a domestic water leak detector.

According to the invention, the new water detector described has a body (1) that is inserted into the household water inlet (2) after the utility company's water meter (3).

The body (1) incorporates a solenoid valve (4), a flowmeter (5) and a pressure switch (6), all operatively interconnected with the control panel (10) which consists of an electronic board (7) in its interior, and a sound generator (14), a keypad (8), an alphanumeric display (9) and a set of pilot lights (11) on its exterior.

The electronic board (7) houses a computer application with two independent routines, which act alternately: one dedicated to detecting microleaks (13) which determines fluid losses greater than 0.15 l/h, and another dedicated to detecting leaks (12) which detects irregular fluid losses greater than 3 l/h.

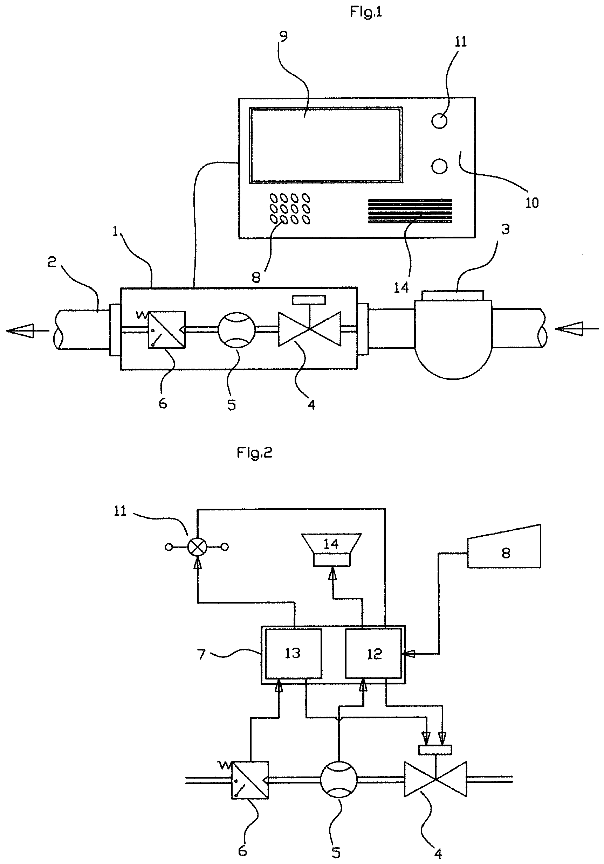

According to the connectivity diagram shown in Figure 2, the pressure switch (6), the solenoid valve (4), the keypad (8), the alphanumeric display (9) and a pilot light (11) are linked to the microleak detection routine (13). The flowmeter (5), the solenoid valve (4), the keypad (8), the alphanumeric display (9) a pilot light (11) and the sound generator (14) are linked to the leak detection routine (12).

The application housed in the electronic board (7) records the flow values (Qn) measured by the flow meter and the pressure values (Pn) measured by the pressure switch. According to programmed algorithms, it sends operating signals to the solenoid valve (4), to the pilot lights (11), the sound generator (14) and the alphanumeric display (9). The algorithms can be edited via the keypad (8).

Specifically, the variables of Qmax, Tmax and TQmax used in the leak routine (12) are input with via the keypad (8) and correspond to:
- Qmax: Maximum flow that the household can consume depending on the number of taps, toilets, bidets, sinks, washing machines and dishwashers they have.
- Tmax: Maximum time during which water consumption can be detected without taking any action, however small it may be.
- TQmax: Maximum time that a flow value can be registered, with the value of time being inversely proportional to the value of the recorded flow.

These variables give rise to a composite function which is represented in the graph in Figure 5. According to this function, any value that falls out of the dark area is a water leak.

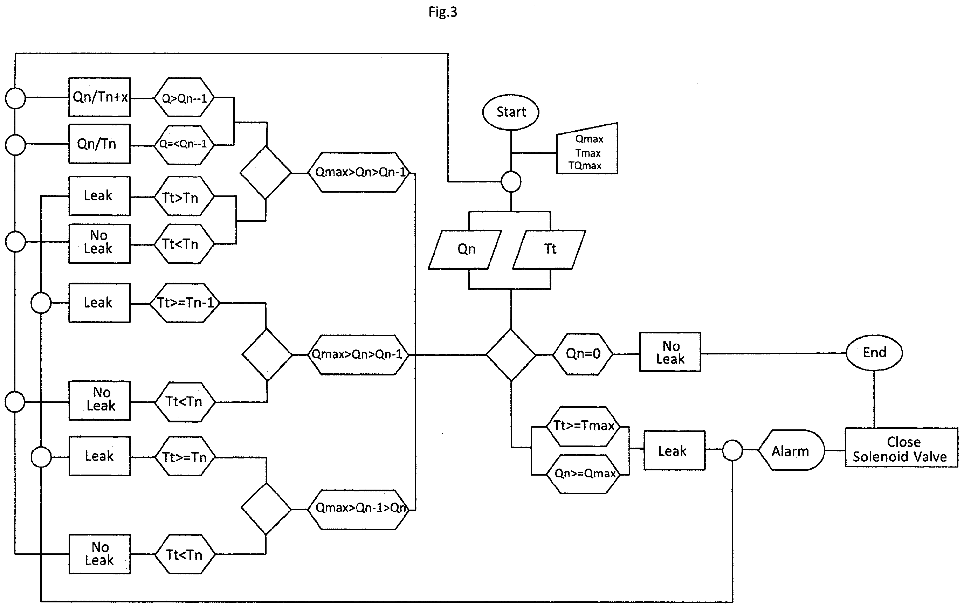

According to Figure 3, the description of the leak routine (12) is:
The application is started and the values for Qmax, Tmax and TQmax are loaded. (This is phase 1 of the routine and should not be repeated again unless the characteristics of the network are changed)

The flow record (Qn) and time record (Tt) are opened. (This is phase 2 of the routine and it is systematically repeated indefinitely until zero flow or a leak are detected)

A first decision process is carried out with the records of (Qn) and (Tt) with six possible outcomes:
1 [Qn> = Qmax]
2 [Tt> = Tmax]
3 [Qmax> Qn> Qn-1]
4 [Qmax> Qn = Qn-1]
5 [Qmax > Qn-1 > Qn]
6 [Qn=0]

The result [Qn = 0] means that there is no network consumption, and therefore no possibility of having a leak. This result ends the application's routine (12), which is then restarted from the beginning.

The results [Qn> = Qmax] and [Tt> = Tmax] initiate a leak subroutine.

The remaining results open a second decision-making process in each case where a second level of results is established:
3 If [Qmax> Qn> Qn-1] it could be that:
   - 3.1 [Q> Qn-1]
   - 3.2 [Q = <Qn-1]
   - 3.3 [Tt> = Tn]
   - 3.4 [Tt <Tn]
4 If [Qmax> Qn = Qn-1 it could be that:
   - 4.1 [Tt> = Tn-1]
   - 4.2 [Tt < Tn]
5 If [Qmax> Qn-1> Qn] it could be that:
   - 5.1 [Tt>= Tn]
   - 5.2 [Tt < Tn]

The results 3.3 [Tt> Tn], 4.1 [Tt> = Tn-1] and 5.1 [Tt> = Tn] initiate a leak subroutine.

The results 3.4 [Tt <Tn], 4.2 [Tt <Tn] and 5.2 [Tt <Tn] do not imply a leak so the application continues.

Lastly, the results 3.1 [Q> Qn-1 and 3.2 [Q = <Qn-1] correspond to an increase and decrease in the recorded flow. In the first case [Q> Qn-1], the application opens a subroutine in which the ratio Qn/Tn becomes Qn/(Tn+x) where x is the total time recorded for Qn-1. (Fig.5) while in the second case the ratio Qn/Tn is maintained and the routine continues normally.

The leak subroutine involves a process for closing the solenoid valve, and a process for triggering the visual and audible alarms involving the alphanumeric display (9), a pilot light (11) and the sound generator (14).

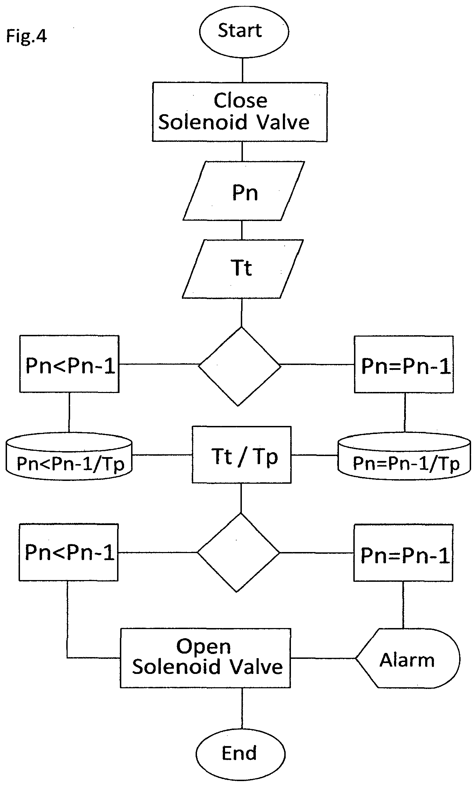

According to Figure 4, the description of the microleak routine (13) is:
When the application starts, a process that closes the solenoid valve (4) begins, thereby pressurising the network.

The network pressure record (Pn) and time record (Tt) are opened.

A first decision process is performed with the records for (Pn) and (Tt) with two possible outcomes:
- 1 [Pn = Pn-1]
- 2 [Pn ≠ Pn-1]

A recount of the identical results is done for a predetermined time interval (Tp) and is stored in the drive.

A second process of decision-making is carried out with the previously stored data by relating the number of repeated results recorded during (Tp) with the total elapsed time (Tt) and two possible outcomes are established that initiate two processes:
- The microleak process that triggers a warning (activate a switch, audible, visual alarm, etc.) and a process (open the solenoid valve).
- A non-microleak process, which activates a process (open the solenoid valve).

End of microleak routine.

## Claims

1. ^{st}.- Fluid leak and microleak detector, of the type that is comprised of a flow meter, a pressure switch and a solenoid valve. It is essentially **characterised by** having the flow meter (5), the pressure switch (6) and the solenoid valve (4) aligned with the household inlet water pipework (2) after the water meter (3) arranged first with the solenoid valve in the direction of flow (4) followed by the flow meter (5) and finally the pressure switch (6). It is **characterised by** having these elements operatively connected to an electronic board (7), programmable logic controller (PLC) or similar element, which contains a computer application with two complementary routines: a routine that detects microleaks (13) for fluid losses above 0.15 l/h which is linked to the pressure switch (6) and the solenoid valve (4), and another routine that detects leaks (12) for fluid losses of around 3l/h and greater, which is linked to the flowmeter (5) and the solenoid valve.

2. ^{nd}.- Fluid leak and microleak detector, according to the preceding claim, that is **characterised by** having the flowmeter (5), the pressure switch (6) and the solenoid valve (4) together with the circuit board (7) arranged inside a body or housing (1) which has a control panel (10) on the outside.

3. ^{rd}.- Fluid leak and microleak detector, according to claims one and two, which is **characterised by** having a keyboard or keypad (8) on the control panel.

4. ^{th}.- Fluid leak and microleak detector, according to claims one and two, that is **characterised by** having one or more pilot lights (11) on the control panel.

5. ^{th}.- Fluid leak and microleak detector, according to claims one and two, which is **characterised by** having an alphanumeric display (9) on the control panel.

6. ^{th}.- Procedure for detecting fluid leaks and microleaks where an electronic board (7) which contains a computer application receives flow readings from a flowmeter (5) and pressure readings from a pressure switch (6), characterised because there are two simultaneous and complementary process lines and two computer routines in the electronic board, a routine for leaks above 3l/h (12) and a microleak routine (13) for leaks above 0.15 l/h, where:
1) The leak routine (12) includes a non-programmable variable Tt: Total time elapsed since the start of the routine, which is reset to 0 when the flow rate is 0, and at least three programmable variables:
- Qmax: Maximum recordable flowrate depending on the network characteristics.
- TQmax: Maximum time that a flow value can be registered, with the value of time Tn being inversely proportional to the flow value Qn.
- Tmax: Maximum time during which network consumption can be detected continuously.
2) The microleak routine (13) includes the following variables:
- Pn: Pressure value registered in the network in real time.
- Pn-1: Pressure value of the network before Pn
- Tt: Total elapsed time since the start of the routine
- Tp: Time interval for the recount of the results

7. ^{th}.- Procedure for detecting fluid leaks and microleaks, according to the sixth claim, **characterised by** having a leak detection routine algorithm (12) that provides the following possible results:
1. If Qn >= Qmax: the leak subroutine is activated.
2. If Tt >= Tmax: the leak subroutine is activated.
3. If Qmax>Qn-1>Qn:
- 3.1 For the cases with Q>Qn-1, the relationship Qn/Tn becomes Qn/(Tn+x) where x is the total time recorded for Qn-1.
- 3.2 For cases with Q=<Qn-1, the relationship Qn/Tn is maintained.
- 3.3 If Tt> = Tmax, the leak subroutine is activated.
- 3.4 If Tt< Tn, there are no leaks.
4. If Qmax > Qn = Qn-1:
- 4.1 If Tt> = Tn-1, the leak subroutine is activated.
- 4.2 If Tt < Tn, there are no leaks.
5. If Qmax> Qn-1> Qn:
- 5.1 If Tt> = Tn, the leak subroutine is activated.
- 5.2 If Tt < Tn, there are no leaks.
6. If Qn = 0: there are no leaks and the process ends.

8. ^{th}.- Procedure for detecting fluid leaks and microleaks, according to the sixth and seventh claim, **characterised by** having a leak subroutine that triggers at least two processes:
- Process of closing the solenoid valve (4).
- Activation process for sending a warning to the user.

9. ^{th}.- Procedure for detecting fluid leaks and microleaks, according to the sixth claim, **characterised by** having microleak detection routine algorithm (13) that establishes at least the following actions:
1- Process of closing the solenoid valve (4), leaving the network pressurised.
2- Opening of the network pressure record (Pn) and the time record (Tt).
3- A first decision-making process that provides for two possible outcomes: [Pn = Pn-1] and [Pn ≠ Pn-1]
4- A recounting process of the identical results obtained during the time interval (Tp) and memory storage.
5- Second decision-making process, relating the number of repeated results recorded during (Tp) with the total elapsed time (Tt) where two results are established:
- There is a microleak, activate the alarm
- There are no microleaks
6- Process of opening the solenoid valve and ending the routine.
